# EUROPÄISCHE PATENTSCHRIFT

(11) **EP 2 034 300 B1**
(45) Veröffentlichungstag und Bekanntmachung des Hinweises auf die Patenterteilung: **21.05.2014**
(21) Anmeldenummer: 08163724.1
(22) Anmeldetag: 05.09.2008
(51) Int. Cl.: G01N 27/26, G01N 27/60

(54) **Vorrichtung zur Messung eines Strömungspotentials**
Device for measuring a streaming potential
Dispositif de mesure d'un potentiel d'écoulement

(30) Priorität: 10.09.2007 DE 102007043094; 10.09.2007 DE 102007043095
(43) Veröffentlichungstag der Anmeldung: 11.03.2009
(73) Patentinhaber: BTG Instruments GmbH, 82211 Herrsching (DE)
(72) Erfinder: Kellner, Maximilian, 82211 Herrsching (DE); Mornhinweg, Markus, 86911 Dießen (DE)
(74) Vertreter: Strandin, Heléne

(56) Entgegenhaltungen:
- EP-A- 0 521 043
- US-A- 3 368 145
- US-A- 4 297 640
- US-A- 4 449 101
- US-A1- 2002 113 597

## Beschreibung

Die Erfindung betrifft eine Vorrichtung zur Messung eines Strömungspotentials in einer flüssigen Probe nach dem Oberbegriff des Patentanspruches 1.

Die Strömungspotentialtitration ist ein Verfahren, mittels dessen man geladene Teilchen in einer Probe, insbesondere kolloidal gelöste Substanzen einer wässrigen Probe, bestimmen kann. Es eignet sich beispielsweise, um Störstoffe bei der Papierherstellung zu ermitteln, sowie Additive zu charakterisieren und auszuwählen. Derartige Vorrichtungen sind beispielsweise aus der US 3 368 145, der US 4 449 101 oder der EP 0 521 043 B1 bekannt. Diese bekannten Anordnungen umfassen einen Probenbehälter mit einer Bohrung, in welcher ein Kolben mittels eines Exzenterantriebs auf- und abbewegbar ist. Der Kolben weist einen geringeren Durchmesser als die Bohrung auf, so dass zwischen dem Kolben und der Innenwand der Bohrung ein Spalt gebildet wird. Durch die Auf- und Abbewegung des Kolbens wird die in den Behälter eingefüllte Probe aus einem unteren Bereich des Probenbehälters durch den Spalt nach oben in einen oberen Bereich verdrängt und wieder zurückgesaugt. Die Antriebseinrichtung für die Probenflüssigkeit umfasst also die Bohrung im Probenbehälter, den darin beweglichen Kolben, sowie den Exzenter mit Antriebsmotor.

Ein wesentliches Problem bei der bekannten Anordnung liegt darin, dass der Kolben sehr exakt geführt sein muss, um eine konstante Spaltbreite rings um den Kolben zu gewährleisten.

Ein weiteres Problem bei derartigen Anordnungen besteht darin, dass nach jeder Messung eine gründliche Reinigung stattfinden muss, da mit Titrierflüssigkeiten gearbeitet werden muss, welche nachfolgende Proben nicht verunreinigen dürfen. Somit sind sowohl die Herstellung als auch der Betrieb derartiger Vorrichtungen aufwändig.

Der Erfindung liegt die Aufgabe zu Grunde, eine Vorrichtung der eingangs genannten Art dahin gehend weiter zu bilden, dass in einfacher Weise eine korrekte Messung erfolgen kann.

Diese Aufgabe wird durch eine Vorrichtung nach Anspruch 1 gelöst.

Insbesondere wird diese Aufgabe durch eine Vorrichtung zur Messung eines Strömungspotentials in einer flüssigen Probe gelöst, die einen Probenbehälter und einen Spalt zwischen einem oberen und einem unteren Bereich des Probenbehälters, jeweils mindestens eine Messelektrode im oberen und im unteren Bereich des Behälters und eine Antriebseinrichtung zum Bewegen von Probenflüssigkeit durch den Spalt mit einer vorbestimmten Strömungsgeschwindigkeit und eine Bohrung im Probenbehälter aufweist, wobei der Spalt zwischen einer Innenwand der Bohrung im Probenbehälter und einem Kalibrierstab gebildet ist, der spielfrei aber herausnehmbar in die Bohrung einsetzbar ist.

Ein wesentlicher Punkt der Erfindung liegt somit darin, dass der Spalt nunmehr nicht von einem während der Messung bewegbaren Teil der Antriebseinrichtung mit definiert wird, sondern der Antrieb der Probenflüssigkeit unabhängig hiervon erfolgt. Die Flüssigkeit wird also durch den während der Messung sich mechanisch/geometrisch nicht verändernden Spalt hindurchgepumpt. Eine derartige, unbewegliche Halterung des Kalibrierstabes in derjenigen Position, in welcher die Messung erfolgt, ist erheblich weniger aufwändig, als eine bewegliche, hochpräzise Führung, wie sie bisher notwendig war.

Zum Reinigen wiederum ist es nötig, den Kalibrierstab aus der Bohrung heraus zu nehmen und sowohl den Probenbehälter als auch den mit der Probenflüssigkeit in Kontakt gekommenen Kalibrierstab zu reinigen.

Die Antriebseinrichtung ist vorzugsweise als Verdrängereinrichtung ausgebildet und mit dem unteren Bereich des Behälters kommunizierend verbunden, so dass das Volumen des unteren Bereichs des Behälters vergrößert und verkleinert werden kann. Damit kann der obere Bereich des Behälters offen bleiben, muss also nicht hydraulisch abgedichtet werden, was eine erhebliche Erleichterung beim Titrieren bedeutet.

Bei einer ersten Ausführungsform der Erfindung ist die Antriebseinrichtung mindestens teilweise im Kalibrierstab ausgebildet. Damit ist das Innere des Behälters nach dem Herausnehmen des Kalibrierstabs frei zugänglich, um gereinigt zu werden. Das Gleiche gilt auch für den Kalibrierstab samt der Antriebseinrichtung.

Die Antriebseinrichtung kann nun einen in einer Bohrung im Kalibrierstab hin- und herbewegbaren Kolben umfassen. Vorzugsweise wird jedoch die Verdrängereinrichtung aus einem (verkleinerten) Kolben gebildet, der über ein Balgenelement oder dergleichen dicht mit dem Kalibrierstab verbunden ist. Bei geeigneter Materialwahl kann hier eine einstückige Verbindung geschaffen werden. Damit sind sowohl eine besonders hohe Haltbarkeit als auch ein besonders einfaches Reinigen gewährleistet.

Bei einer anderen Ausführungsform der Erfindung ist die Antriebseinrichtung im Behälter angeordnet. Besonders eignet sich hierzu der untere Bereich des Behälters, der mit einer Kammer verbunden werden kann, die durch eine Membran abgeschlossen ist. Diese Membran kann dann durch einen entsprechenden Antrieb bewegt werden, so dass die Probenflüssigkeit verdrängt wird.

Vorzugsweise weisen der Kalibrierstab und/oder die Innenwand der Bohrung Nuten auf, welche mindestens einen kalibrierten Spalt bilden. Der Kalibrierstab kann dann fest (aber herausnehmbar) über die Bereiche zwischen den Nuten in der Bohrung des Behälters gelagert werden.

Vorzugsweise werden die Nuten in ihrer Dimensionierung der zu messenden Probe angepasst. Dafür ist es von Vorteil, wenn zu jeder Messvorrichtung ein "Satz" von Kalibrierstäben gefertigt und ausgeliefert wird, die unterschiedliche Nuten haben. Damit können dann je nach der zu bearbeitenden Probe weitere oder engere Nuten gewählt werden, um eine Optimierung der Strömungsgeschwindigkeit zu erreichen, ohne dass dabei die Antriebsgeschwindigkeit verändert werden muss. Dies wiederum hat den Vorteil, dass die nachgeschaltete Elektronik zur Messung des Strömungspotentials, welche ja in Abstimmung mit der Oszillationsfrequenz der Strömungsgeschwindigkeit arbeiten muss, nicht zu verändert werden braucht.

Die Antriebseinrichtung ist vorzugsweise derart steuerbar ausgebildet, dass ein im Wesentlichen beliebiger zeitlicher Verlauf der Strömungsgeschwindigkeit voreinstellbar ist. Dadurch kann man z.B. an Stelle einer wie bisher üblichen sinusförmigen Bewegung des Kolbens (hinsichtlich seiner Geschwindigkeit) und damit eines entsprechend sinusförmigen Geschwindigkeitsverlaufes der Strömung einen rechteckförmigen Geschwindigkeitsverlauf der Strömungsgeschwindigkeit einstellen. Nachdem bei den üblichen Messungen das Maximalpotential gemessen wird, welches bei der maximalen Strömungsgeschwindigkeit auftritt, steht bei einem rechteckförmigen Geschwindigkeitsverlauf eine erheblich längere Zeit zur Verfügung, innerhalb derer die gemessenen Signale gemittelt werden können.

Bevorzugte Ausführungsformen der Erfindung ergeben sich aus den Unteransprüchen.

Nachfolgend werden Ausführungsbeispiele der Erfindung anhand von Abbildungen näher erläutert. Hierbei zeigen
- - Fig. 1: Einzelteile einer aus vier "Baugruppen" aufgebauten Vorrichtung;
- - Fig. 2: die Anordnung nach Fig. 1 in teilweise zusammengebautem Zustand;
- - Fig. 3 u. 4: die vollständig zusammengebaute Vorrichtung in zwei verschiedenen Betriebszuständen;
- - Fig. 5: einen Schnitt entlang der Linie V-V aus Fig. 3;
- - Fig. 6: eine Antriebseinrichtung mit Kalibrierstab entsprechend einer weiteren Ausführungsform der Erfindung; und
- - Fig. 7: eine weitere Ausführungsform der Erfindung, bei welcher die Antriebseinrichtung mit dem Probenbehälter verbunden ist.

In der nachfolgenden Beschreibung werden für gleiche und gleich wirkende Teile dieselben Bezugsziffern verwendet.

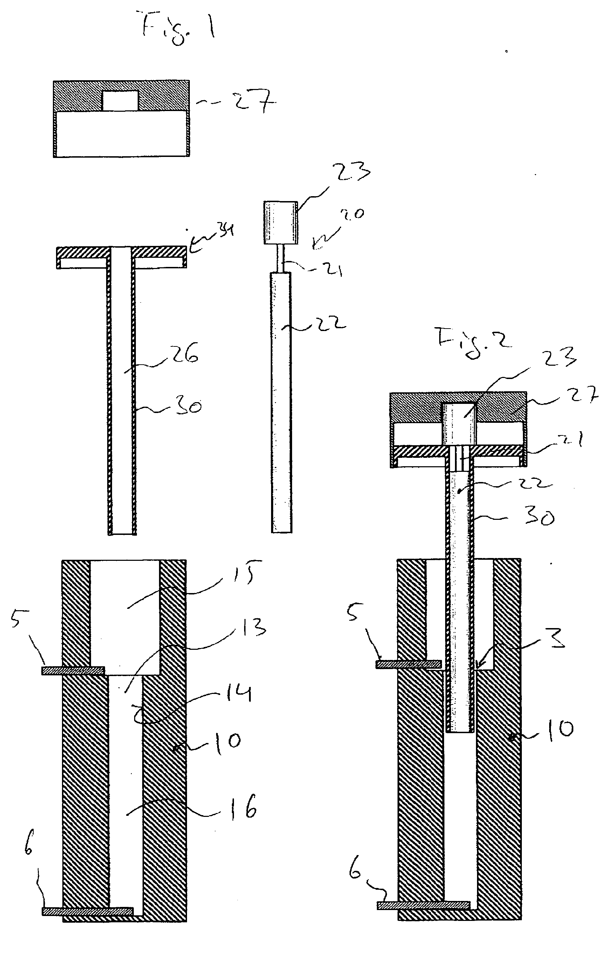

Wie in Fig. 1 gezeigt, ist ein Probenbehälter 10 vorgesehen, in welchem eine Bohrung mit einem oberen Bohrungsabschnitt 15 von großem Durchmesser, und einem unteren Bohrungsabschnitt 16 von kleinem Durchmesser vorgesehen sind. Am Übergang zwischen dem oberen Bohrungsabschnitt 15 und dem unteren Bohrungsabschnitt 16 ist eine erste Elektrode 5 vorgesehen. Am Boden des unteren Bohrungsabschnittes 16 ist eine zweite Elektrode 16 vorgesehen. Zwischen den beiden Elektroden 5, 6 wird mittels einer (nicht gezeigten) Messeinrichtung das Strömungspotential abgegriffen.

In die Bohrung 15/16 ist ein Kalibrierstab 30 einsetzbar, wie dies in Fig. 2 gezeigt ist. Nach dem Einsetzen steht eine Haltekappe 34 mit einem Oberrand des Probenbehälters 10 in Verbindung. Die Haltekappe 34 weist hinreichend große Öffnungen (nicht gezeigt) auf, um mittels Titrierspitzen eine oder mehrere Titrierflüssigkeiten zuführen zu können.

Der Kalibrierstab 30 weist bei dieser Ausführungsform der Erfindung eine innere Bohrung auf, die als Zylinder 26 fungiert. In diesen Zylinder 26 kann ein Verdrängerkolben 22 eingesetzt werden, der über eine Spindel 21 von einem in seiner Drehposition / Geschwindigkeit möglichst präzise steuerbaren Motor (z.B. einem Schrittmotor) in Drehung versetzt werden kann. Die Spindel 21 steht über ein nicht gezeigtes Gewinde innerhalb des Verdrängerkolbens 22 mit diesem in Verbindung, so dass je nach Drehrichtung des Motors 23 der Verdrängerkolben 22 im Zylinder 26 auf- und abbewegt wird.

Wenn der Verdrängerkolben 22 ganz in den Zylinder 26 eingesetzt ist, so kann eine Abdeckkappe 27 aufgesetzt werden. Die Anordnung ist hierbei derart getroffen, dass ein im Wesentlichen flüssigkeitsdichtes Teil entsteht, das nach Durchführung einer Messung gesondert gereinigt werden kann.

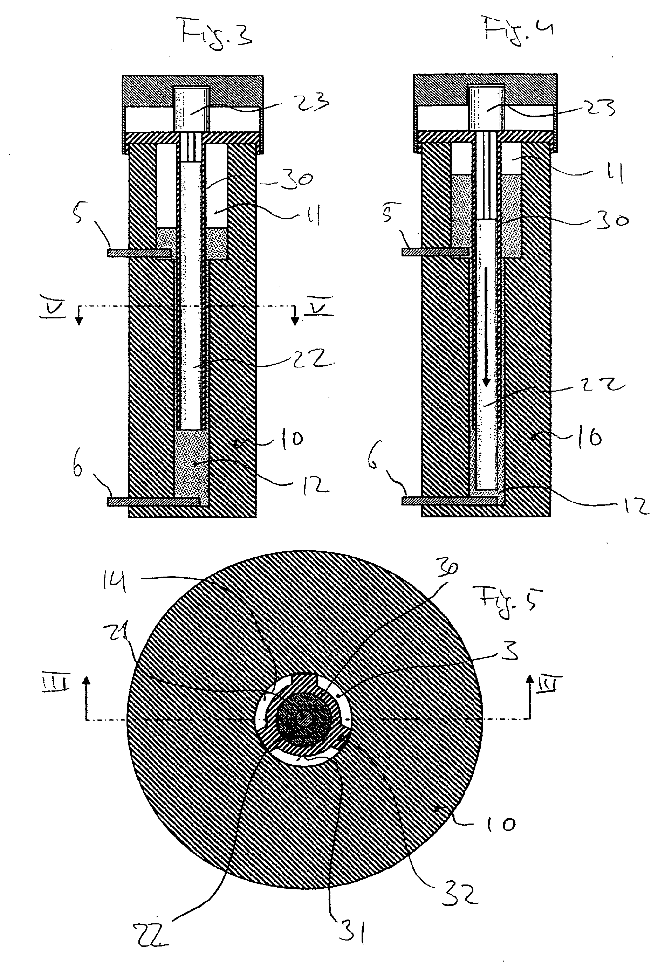

Wenn - wie in den Fig. 3 und 4 gezeigt, die Vorrichtung vollständig zusammengebaut ist, kann während einer Messung der Kolben 26 von einer oberen Position (siehe Fig. 3) in eine untere Position (siehe Fig. 4) durch den Motor 23 verfahren werden. Dadurch wird die vom Verdrängerkolben 26 verdrängte Probenflüssigkeit vom unteren Bereich 12 in den oberen Bereich 11 der Behälterbohrung verschoben und muss dabei durch einen Spalt 3 zwischen dem Kalibrierstab 30 und einer Innenwand 14 des unteren Bohrungsabschnittes 16 strömen.

Wie in Fig. 5 gezeigt, ist zur Schaffung dieses Spaltes 3 der Kalibrierstab 30 auf seiner Außenfläche mit drei Nuten 31 versehen, zwischen denen Vorsprünge 32 stehen gelassen sind. Diese Vorsprünge 32 sind nun so dimensioniert, dass sie eng an der Innenwand 14 des unteren Bohrungsabschnitts 16 anliegen. Die Passung ist derart getroffen, dass der Kalibrierstab 30 dennoch aus dem unteren Bohrungsabschnitt 16 herausgenommen werden kann. Bei einer alternativen, hier nicht gezeigten Ausführungsform ist hierbei kein reiner Gleiteingriff, sondern ein Gewinde- oder Bajonetteingriff oder dergleichen vorgesehen, so dass auch bei größeren hydraulischen Kräften der Kalibrierstab 30 während einer Messung sicher an seinem Platz bleibt.

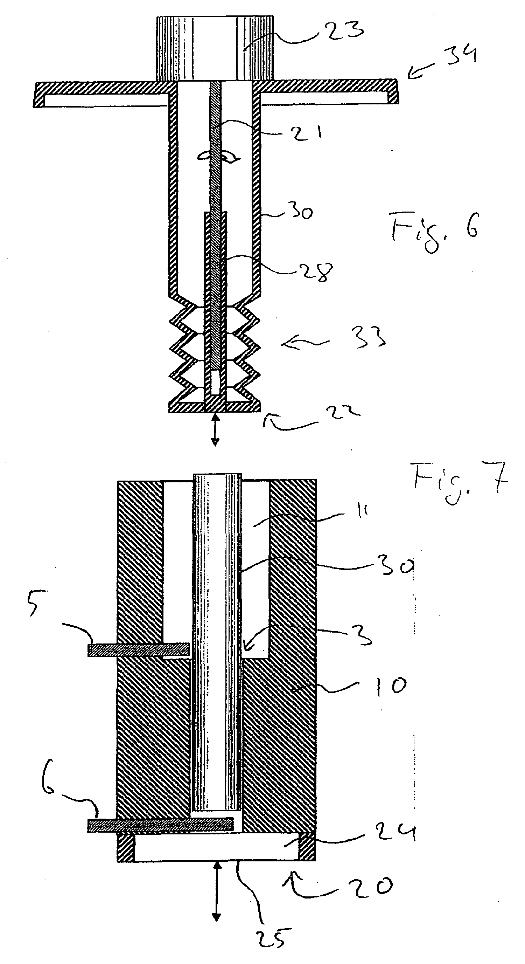

Bei der in Fig. 6 gezeigten alternativen Ausführungsform der Erfindung ist der Verdrängerkolben 22 nicht in einem Zylinder 26 gelagert, sondern ist über ein Balgenelement 33 fest (im gezeigten Ausführungsbeispiel einstückig) mit dem Kalibrierstab 30 verbunden. Durch eine entsprechende Drehung der Spindel 21, die in einem Gewindeabschnitt 28 des Verdrängerkolbens 22 gelagert ist, wird der Verdrängerkolben 22 nach oben und unten gefahren, so dass die Probenflüssigkeit vom unteren Bereich 11 in den oberen Bereich 12 und zurück, verdrängt werden kann.

Die in Fig. 7 gezeigte weitere Ausführungsform der Erfindung unterscheidet sich dadurch von den zuvor gezeigten Ausführungsformen, dass die Antriebseinrichtung 20 zur Verdrängung der Flüssigkeit durch den Spalt nicht im Kalibrierstab 30 angeordnet ist, sondern mit dem Probenbehälter 10 verbunden ist. Hierzu ist eine Pumpkammer 24 vorgesehen, die durch eine Membran 25 abgeschlossen ist. Eine (hier nicht gezeigte) Antriebseinrichtung ist vorgesehen, welche die Membran 25 bewegt, so dass das in der Pumpkammer 24 befindliche Probenvolumen durch den Spalt in der wie oben beschriebenen Weise verdrängt werden kann.

Zur Bildung der Pumpkammer 24 ist vorzugsweise eine Anordnung vorgesehen, die leicht mit dem Probenbehälter 10 verbunden werden kann, um sie zu Reinigungszwecken abnehmen zu können.

Der Kalibrierstab 30 kann bei dieser Anordnung ohne Innenbohrung ausgeführt werden, wobei ebenfalls die in Fig. 5 gezeigten Nuten 31 vorgesehen werden. Gleiches gilt natürlich auch für die Anordnung nach Fig. 6, wobei der Außenumfang des Verdrängerkolbens 22 und des Balgenelements 33 derart gering dimensioniert ist, dass eine, die Ladungstrennung im Spalt 3 beeinflussende Wirkung nicht auftritt.

### Bezugszeichenliste

- 1: Probe
- 3: Spalt
- 5: 1. Messelektrode
- 6: 2. Messelektrode
- 10: Probenbehälter
- 11: oberer Bereich
- 12: unterer Bereich
- 13: Bohrung
- 14: Innenwand
- 15: oberer Bohrungsabschnitt
- 16: unterer Bohrungsabschnitt
- 20: Antriebseinrichtung
- 21: Spindel
- 22: Verdrängerkolben
- 23: Motor
- 24: Pumpkammer
- 25: Membran
- 26: Zylinder
- 27: Abdeckkappe
- 28: Gewindeabschnitt
- 30: Kalibrierstab
- 31: Nut
- 32: Vorsprung
- 33: Balgenelement
- 34: Haltekappe

## Patentansprüche

1. Vorrichtung zur Messung eines Strömungspotentials in einer flüssigen Probe, mit einem Probenbehälter (10) und einem Spalt (3) zwischen einem oberen (11) und einem unteren Bereich (12) des Probenbehälters (10), mit jeweils mindestens einer Messelektrode (5, 6) im oberen (11) und im unteren Bereich (12) des Behälters (10), mit einer Antriebseinrichtung (20) zum Bewegen von Probenflüssigkeit (1) durch den Spalt (3) mit einer vorbestimmten Strömungsgeschwindigkeit (v) und mit einer Bohrung (13) im Probenbehälter (10),
**dadurch gekennzeichnet, dass**
der Spalt (3) zwischen einer Innenwand der Bohrung (13) im Probenbehälter (10) und einem Kalibrierstab (30) gebildet ist, der spielfrei aber herausnehmbar in die Bohrung (13) einsetzbar ist.

2. Vorrichtung nach Anspruch 1,
**dadurch gekennzeichnet, dass**
die Antriebseinrichtung (20) derart als Verdrängereinrichtung ausgebildet und mit dem unteren Bereich (12) des Behälters (10) verbunden ist, dass das Volumen des unteren Bereichs (12) vergrößer- und verkleinerbar ist.

3. Vorrichtung nach einem der vorhergehenden Ansprüche,
**dadurch gekennzeichnet, dass**
die Antriebseinrichtung (20) mindestens teilweise im Kalibrierstab (30) ausgebildet ist.

4. Vorrichtung nach einem der vorhergehende Ansprüche,
**dadurch gekennzeichnet, dass**
die Antriebseinrichtung (20) im Behälter (10) angeordnet ist.

5. Vorrichtung nach einem der vorhergehenden Ansprüche,
**dadurch gekennzeichnet, dass**
der Kalibrierstab (30) und/oder die Innenwand (14) der Bohrung (10) Nuten (31) zur Bildung mindestens eines kalibrierten Spaltes (3) aufweist.

6. Vorrichtung nach einem der vorhergehenden Ansprüche,
**dadurch gekennzeichnet, dass**
die Antriebseinrichtung (20) einen Verdrängerkolben (22) umfasst, der an oder im Kalibrierstab (30) angeordnet und durch einen motorischen Antrieb (23) verschiebbar ist.

7. Vorrichtung nach einem der vorhergehenden Ansprüche, insbesondere nach Anspruch 6,
**dadurch gekennzeichnet, dass**
der Verdrängerkolben (22) mit dem Kalibrierstab (30) über ein Balgenelement (33) vorzugsweise einstückig verbunden ist.

8. Vorrichtung nach einem der vorhergehenden Ansprüche,
**dadurch gekennzeichnet, dass**
die Antriebseinrichtung (20) zusammen mit dem Kalibrierstab (30) vom Probenbehälter (10) trennbar ist.

9. Vorrichtung nach einem der vorhergehenden Ansprüche,
**dadurch gekennzeichnet, dass**
die Antriebseinrichtung (20) derart steuerbar ausgebildet ist, dass ein im Wesentlichen beliebiger zeitlicher Verlauf der Strömungsgeschwindigkeit voreinstellbar ist.

## Claims

1. A device for measuring a streaming potential in a liquid sample, including a sample container (10) and a gap (3) between an upper (11) and a lower region (12) of the sample container (10), including at least one measuring electrode (5, 6) in the upper (11) and lower regions (12) of the container (10), including a driving apparatus (20) for moving of the sample fluid (1) through the gap (3) at a predetermined streaming velocity (v), and including a bore (13) in the sample container (10),
**characterized in that**
the gap (3) between an inner wall of the bore (13) in the sample container (10) and a calibration rod (30) is formed which is insertable into the bore (13) in a clearance-free but removable manner.

2. The device according to claim 1,
**characterized in that**
the driving apparatus (20) is formed as a displacement device such that and connected to the lower region (12) of the container (10) such that the volume of the lower region (12) is enlargeable and reducible.

3. The device according to one of the preceding claims,
**characterized in that**
the driving apparatus (20) is at least partially formed in the calibration rod (30).

4. The device according to one of the preceding claims,
**characterized in that**
the driving apparatus (20) is disposed in the container (10).

5. The device according to one of the preceding claims,
**characterized in that**
the calibration rod (30) and/or the inner wall (14) of the bore (10) has/have grooves (31) for forming at least one calibration gap (3).

6. The device according to one of the preceding claims,
**characterized in that**
the driving apparatus (20) comprises a displacement piston (22) which is disposed on or in the calibration rod (30) and which is displaceable using a motorized drive (23).

7. The device according to one of the preceding claims, in particular according to claim 6,
**characterized in that**
the displacement piston (22) is connected to the calibration rod (30) via a bellows element (33), preferably in a one-piece manner.

8. The device according to one of the preceding claims,
**characterized in that**
the driving apparatus (20) is separable from the sample container (10) together with the calibration rod (30).

9. The device according to one of the preceding claims,
**characterized in that**
the driving apparatus (20) is controllably formed such that essentially any temporal course of the streaming velocity can be preset.

## Revendications

1. Dispositif de mesure d'un potentiel d'écoulement dans un échantillon liquide, comportant un récipient à échantillon (10) et une fente (3) entre une section supérieure (11) et une section inférieure (12) du récipient à échantillon (10), comportant au moins une électrode de mesure (5, 6) respectivement dans la section supérieure (11) et la section inférieure (12) du récipient (10), comportant un dispositif d'entraînement (20) destiné à déplacer le liquide d'échantillonnage (1) dans la fente (3) à une vitesse d'écoulement (v) prédéterminée et comportant un alésage (13) dans le récipient à échantillon (10),
**caractérisé en ce que**
la fente (3) est formée entre une paroi intérieure de l'alésage (13) du récipient à échantillon (10) et une jauge de calibrage (30) qui peut être insérée, sans jeu mais de manière amovible, dans l'alésage (13).

2. Dispositif selon la revendication 1,
**caractérisé en ce que**
le dispositif d'entraînement (20) est conçu sous la forme d'un dispositif de déplacement qui, associé à la section inférieure (12) du récipient (10), permet d'accroître ou de réduire le volume de la section inférieure (12).

3. Dispositif selon l'une des revendications précédentes,
**caractérisé en ce que**
le dispositif d'entraînement (20) est formé au moins partiellement dans la jauge de calibrage (30).

4. Dispositif selon l'une des revendications précédentes,
**caractérisé en ce que**
le dispositif d'entraînement (20) est disposé dans le récipient (10).

5. Dispositif selon l'une des revendications précédentes,
**caractérisé en ce que**
la jauge de calibrage (30) et/ou la paroi intérieure (14) de l'alésage (10) présentent des rainures (31) destinées à constituer au moins une fente (3) calibrée.

6. Dispositif selon l'une des revendications précédentes,
**caractérisé en ce que**
le dispositif d'entraînement (20) comprend un piston de déplacement (22) qui est disposé sur ou dans la jauge de calibrage (30) et qui est déplaçable grâce à un entraînement motorisé (23).

7. Dispositif selon l'une des revendications précédentes, notamment selon la revendication 6,
**caractérisé en ce que**
le piston de déplacement (22) est relié à la jauge de calibrage (30) par l'intermédiaire d'un élément en soufflet (33) et ce, de préférence d'un seul tenant.

8. Dispositif selon l'une des revendications précédentes,
**caractérisé en ce que**
le dispositif d'entraînement (20), conjointement à la jauge de calibrage (30), est séparable du récipient à échantillon (10).

9. Dispositif selon l'une des revendications précédentes,
**caractérisé en ce que**
le dispositif d'entraînement (20) est conçu pour être contrôlable de manière que tout type d'évolution dans le temps de la vitesse d'écoulement puisse être préréglé.
